Europäisches Patentamt

European Patent Office

Office européen des brevets

(11) Numéro de publication: **0 341 153**
**A1**

## (12) DEMANDE DE BREVET EUROPEEN

(21) Numéro de dépôt: 89401247.5

(22) Date de dépôt: 03.05.89

(51) Int. Cl.⁴: **A 01 B 33/06**

(30) Priorité: 04.05.88 FR 8806014

(43) Date de publication de la demande:
08.11.89 Bulletin 89/45

(84) Etats contractants désignés:
BE CH DE ES FR GB GR IT LI LU NL

(71) Demandeur: SOCIETE DE FABRICATION DE MATERIEL
RICHARD BRETON
Thieffrain
F-10140 Vendeuvre-sur-Barse (FR)

(72) Inventeur: Richard, Jean-Pierre
55, rue du Bourgetet
F-10140 Vendeuvre-sur-Barse (FR)

(74) Mandataire: Casalonga, Axel et al
BUREAU D.A. CASALONGA - JOSSE Morassistrasse 8
D-8000 Munich 5 (DE)

(54) Cultivateur rotatif polyvalent à rotors indépendants mobiles et orientables.

(57) Cultivateur rotatif polyvalent adapté à un engin porteur automoteur pour cultures en lignes notamment de la vigne. Ce cultivateur rotatif comporte un moyen amovible d'attelage monté sur un bâti-support (7), des moyens d'ameublissement du sol montés sur le bâti-support et des moyens d'entraînement desdits moyens d'ameublissement qui comprennent au moins deux rotors dentés (8) à axes sensiblement verticaux disposés dans un plan perpendiculaire au sens de déplacement de l'engin porteur. Chaque rotor (8) est accouplé mécaniquement de façon rigide à un organe d'entraînement indépendant (10). Chaque ensemble formé par un rotor et son organe d'entraînement est réglable individuellement en inclinaison et en translation horizontales dans ledit plan. Les organes d'entraînement (10) peuvent être des moteurs hydrauliques ou accouplés à un système de transmission mécanique qui est accouplé à une prise de force de l'engin porteur.

FIG.2

EP 0 341 153 A1

## Description

## CULTIVATEUR ROTATIF POLYVALENT A ROTORS INDEPENDANTS MOBILES ET ORIENTABLES.

La présente invention concerne un cultivateur rotatif polyvalent à rotors indépendants orientables adapté à un engin porteur automoteur pour cultures en lignes notamment de la vigne.

Dans le cas particulier de la culture des vignes, par manque de matériel adéquat pour travailler le sol, des viticulteurs se trouvent confrontés à de nombreux problèmes leur rendant le travail plus difficile. Ce sont par exemple le problème de ravinement dans des vignobles plantés en côteaux, le problème de traitements "herbicides", le problème d'épandage d'engrais et d'humus d'origine diverse qui doivent être enfouis mélangés à la terre afin d'éviter leur entraînement vers les parties basses des vignes, ou le problème de protection des ceps de vigne contre la gelée par buttage en terre affinée assurant une protection plus efficace qu'avec un buttage traditionnel

Il n'existe à l'heure actuelle aucune machine permettant de résoudre de tels problèmes.

Parmi les machines agricoles existantes, on connaît des herses rotatives qui sont des machines performantes pour ameublir le sol et le rendre insensible aux problèmes de ravinement. D'une manière générale, les herses rotatives sont attelées à un tracteur et comportent une rangée de rotors dentés à axes verticaux couplés mécaniquement, et un rouleau à axe horizontal parallèle à la rangée de rotors et transversal au sens d'avancement du tracteur. Les dents du rotor permettent d'une part d'émiétter et d'affiner une couche de mottes de terre et d'autre part de créer un ébranlement de la terre en profondeur au-dessous de la couche affinée permettant l'infiltration des eaux de pluie. Le rouleau denté situé derrière la rangée de rotors permet quant à lui d'affiner et de tasser la couche de terre ameublie par les dents des rotors en vue de semis. Les axes des rotors sont mécaniquement accouplés entre eux par l'intermédiaire de pignons. Par conséquent le sens de rotation de chaque rotor qui dépend de ceux des autres est fixe et non inversible, et les entraxes des rotors, dont les axes sont parallèles, sont fixes.

Il est possible d'envisager de diminuer la largeur transversales des herses rotatives en réduisant le nombre de rotors de la rangée et la longueur du rouleau afin de permettre à ces herses de largeur réduite de travailler le sol entre les rangées de vigne. Cependant de telles herses rotatives dont les axes verticaux des rotors sont accouplés mécaniquement et mutuellement dépendants les uns des autres ne permettent que l'ameublissement d'une bande de terre de largeur fixe. De plus, elles ne sont nullement capables d'accomplir un buttage ou un débuttage.

La présente invention a pour objet un cultivateur rotatif polyvalent à rotors indépendants orientables pour cultures en lignes notamment de la vigne permettant aussi bien l'ameublissement du sol, le mélange d'apport d'éléments divers à la terre, le broyage grossier de déchets végétaux qu'un buttage ou un débuttage.

Le cultivateur rotatif, selon l'invention, est adapté à un engin porteur automoteur et comporte un moyen amovible d'attelage monté sur un bâti-support, des moyens d'ameublissement du sol montés sur le bâti-support et des moyens d'entraînement desdits moyens d'ameublissement qui comprennent au moins deux rotors dentés à axes sensiblement verticaux disposés dans un plan sensiblement transversal au sens de déplacement de l'engin porteur.

Selon l'invention, chaque rotor est accouplé mécaniquement de façon rigide à un organe d'entraînement indépendant. Chaque ensemble constitué par un rotor et son organe d'entraînement est réglable individuellement en inclinaison et en translation horizontale dans ledit plan tranversal.

Selon un mode préféré de réalisation de l'invention, le bâti-support est pourvu de premières rainures perpendiculaires au sens de déplacement de l'engin porteur, de sorte que le bâti-support puisse être déporté en translation perpendiculairement au sens de déplacement de l'engin porteur et recevoir tout type d'attelage spécifique à l'engin porteur par exemple attelage trois points sur tracteurs vignerons étroits. Le bâti-support est aussi de préférence pourvu d'une deuxième rainure parallèle aux premières rainures, de façon à permettre la translation horizontale des ensembles rotors-organes d'entraînement dans ledit plan par rapport au bâti-support. Le moyen d'attelage peut être monté sur le bâti-support par l'intermédiaire d'une pièce allongée et de brides, de façon à permettre de régler la position du bâti-support parallèlement au sens de déplacement de l'engin porteur.

Selon un mode de réalisation de l'invention, le cultivateur rotatif comporte une pièce amovible montée sur le bâti-support pour décompacter le sol devant les rotors dans le sens du déplacement de l'engin porteur. La pièce amovible est de préférence montée de façon à pouvoir être décalée longitudinalement, latéralement et verticalement par rapport au bâti-support. Le cultivateur rotatif est adapté pour recevoir sans transformation toute sorte d'accessoires à la place de la pièce amovible tels que buttoir, griffes, dents flexibles, dents rigides droites ou inclinées, coutre, déflecteur et versoir de profils divers.

Selon un mode préféré de réalisation de l'invention, les organes d'entraînement indépendants sont des moteurs hydrauliques alimentés par un circuit hydraulique raccordé à l'engin porteur qui possède soit un circuit hydraulique intégré soit une centrale hydraulique amovible.

Selon une variante de réalisation de l'invention, le cultivateur rotatif comporte un système de transmission mécanique accouplé d'une part aux organes d'entraînement des rotors et d'autre part à une prise de force de l'engin porteur. Une telle réalisation permet à l'utilisateur d'utiliser un mode d'entraînement des rotors autre que des moteurs dont les moyens d'alimentation ne sont pas toujours assurés sur les lieux de travail.

On peut choisir un système de transmission mécanique qui comprend un train d'engrenage à plusieurs sorties, chaque sortie étant accouplée à l'un des organes d'entraînement par l'intermédiaire un arbre télescopique, chacun muni de deux joints universels. Le train d'engrenage est accouplé soit directement, soit par l'intermédiaire d'un arbre télescopique muni de deux joints universels à ses extrémités, à la prise de force de l'engin porteur.

Le cultivateur rotatif, selon l'invention, est adapté à tout type d'engin porteur automoteur et permet de réaliser des travaux divers tels que l'ameublissement du sol à profondeur et largeur de travail variables, le buttage, le débuttage, le mélange d'engrais et d'humus à la terre, et le broyage grossier des déchets végétaux. Il peut être utilisé en combinaison avec d'autres machines telles qu'un broyeur de sarments pour effectuer le broyage et l'enfouissage des sarments en un seul passage de l'engin porteur. Le temps nécessaire du travail est de ce fait considérablement réduit.

L'invention sera mieux comprise à l'étude de la description détaillée d'un mode de réalisation particulier faite à titre d'exemple nullement limitatif et illustré par les dessins annexés sur lesquels :

la figure 1 est une vue de profil de l'ensemble constituée par un engin porteur automoteur et un cultivateur rotatif, selon l'invention, en position relevée;

la figure 2 est une vue de face arrière d'un cultivateur rotatif selon l'invention;

la figure 3 est une vue schématique des réglages angulaires des rotors d'un cultivateur rotatif selon l'invention; et

la figure 4 est une vue de dessus schématique d'un variante de réalisation de l'invention.

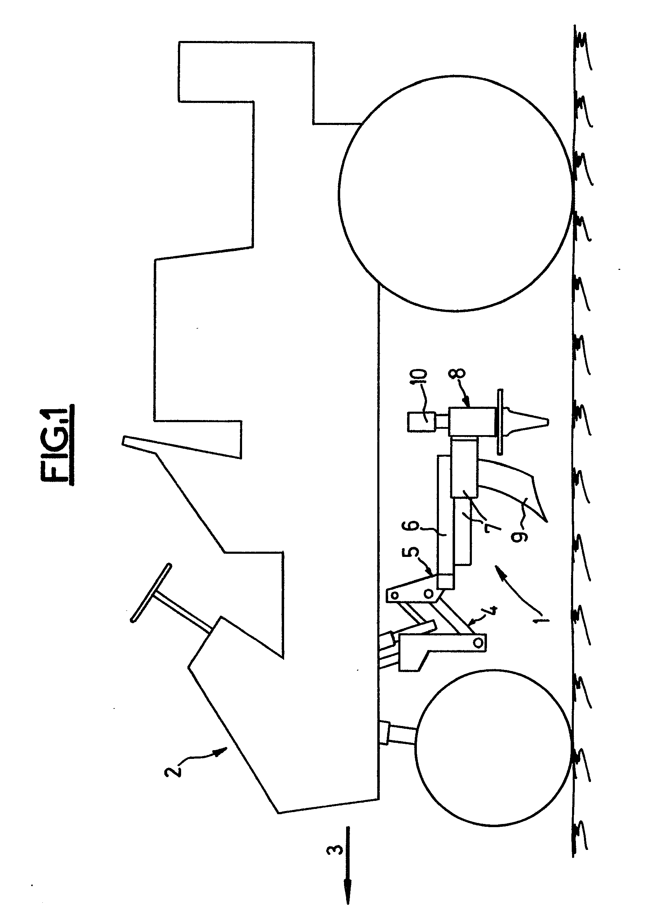

Tel qu'il est illustré sur la figure 1, le cultivateur rotatif 1 en position relevée est attelé à un engin porteur automoteur 2 dont le sens de déplacement est indiqué par la flèche 3. L'engin porteur 2 est muni de moyens de relevage hydraulique 4 sur lesquels est fixé un système d'attelage amovible 5 qui est adaptable sans difficulté sur tout tracteur enjambeur vigneron, microtracteur ou tracteur de faible voie utilisé en culture maraîchère par exemple. Le cultivateur rotatif peut être monté entre les roues avant et arrière de l'engin porteur comme illustré sur la figure 1 ou à l'arrière des roues arrière selon les besoins.

Le système d'attelage 5 comporte une pièce allongée 6 montée sur un bâti-support 7 dont la position par rapport à la pièce 6 est réglable. Le bâti-support 7 est pourvu de rainures, non représentées, perpendiculaires au sens de déplacement 3 de l'engin porteur 2. Grâce à un système de brides, non représenté, le bâti-support 7 peut être décalé soit parallèlement soit perpendiculairement à la pièce d'attelage 6 et donc par rapport à l'engin porteur 2, de sorte que l'on puisse régler l'avancé ou le déportement latéral du bâti-support 7 par rapport à l'engin porteur 2.

Sur la partie arrière du bâti-support 7 sont fixés des rotors dentés 8 à axes sensiblement verticaux. Devant les rotors 8 et en dessous du bâti 7 est monté un buttoir unique amovible 9 pour décompacter le sol devant les dents des rotors 8 et de ce fait réduire les contraintes causées par le sol et subies par le rotor 8. La puissance nécessaire pour le fonctionnement des rotors 8 est donc réduite. Les moyens de relevage hydrauliques 4 permettent de régler la profondeur du sol à travailler. Chaque rotor 8 est accouplé mécaniquement de façon rigide à un moteur 10 indépendant alimenté par un circuit hydraulique non représenté, ou à un système de transmission mécanique qui est accouplé à une prise de force de l'engin porteur.

Le cultivateur rotatif représenté sur la figure 2 sur laquelle les pièces identiques portent les mêmes références comporte deux rotors 8 dont les axes se trouvent dans un plan perpendiculaire au sens de déplacement de l'engin porteur. Chaque rotor 8 est accouplé mécaniquement à un moteur hydraulique 10. L'accouplement mécanique entre le rotor 8 et le moteur 10 est réalisé par l'intermédiaire d'un palier de transmission cylindrique dont l'enveloppe 11 est rendue solidaire par exemple par soudage à une plaque-support 12. En se référant à un seul rotor 8, l'arbre 13 est accouplé directement à l'arbre du moteur 10. Un plateau porte-dents 14 discoïdal comporte en son centre un collet tubulaire 15 qui reçoit l'extrémité inférieure de l'arbre 13 du rotor 8. L'accouplement mécanique entre l'arbre 13 et le plateau 14 est assuré au moyen d'une goupille de sécurité 16. Sur la surface inférieure du plateau 14 sont montées deux dents 17 diagonalement opposées par l'intermédiaire de boulons d'axes 18. Les extrémités inférieures des dents 17 sont légèrement écartées vers l'extérieur. Chaque dent 17 présente une forme trapézoïdale, d'extrémité inférieure à largeur réduite.

Chaque plaque-support 12 est munie de deux lumières 20 de part et d'autre de l'enveloppe 11 du rotor 8. Les lumières 20 sont en forme de secteur annulaire arrondi à chaque extrémité et symétrique par rapport au plan contenant l'axe du rotor et perpendiculaire à la plaque. Le bâti-support 7 comporte une poutre transversale 21 sur laquelle sont montés les rotors 8. La poutre 21 est pourvue longitudinalement d'une rainure 22 la traversant. Les plaques 12 sont fixées à la poutre 21 par l'intermédiaire des boulons 23 traversant les lumières 20 et la rainure 22.

Grâce à ce montage, on peut régler l'inclinaison de l'arbre 8 par rapport à la poutre 21 dans le plan de la figure 2 en desserrant les boulons 23 et ajustant l'inclinaison de la plaque 12 par rapport à la poutre 21 grâce aux lumières 20. On peut aussi déplacer latéralement les rotors 8 en desserrant les boulons 23 qui coulissent à l'intérieur de la rainure 22 permettant ainsi à l'ensemble constitué d'un rotor 8 et de son moteur 10 associés à la plaque 12 et aux boulons 23, de se déplacer latéralement.

Les plaques-support 12 comportent chacune un guide de sécurité non représenté. Il est perpendiculaire à la plaque-support 12 et coaxial aux lumières annulaires 20, et traverse la rainure 22. Il constitue l'axe de pivotement pour le réglage d'inclinaison du rotor 8 et bloque le mouvement vertical du rotor 8 lorsque les boulons 23 sont desserrés.

Les moteurs 10 sont mutuellement indépendants ainsi que les rotors 8. Les paramètres de fonctionnement des rotors 8 tels que la vitesse de rotation, le sens de rotation, l'orientation de l'axe et l'emplacement par rapport à la poutre 21 sont indépendants pour chaque rotor 8. Cela permet les utilisations les plus diverses du cultivateur rotatif de l'invention.

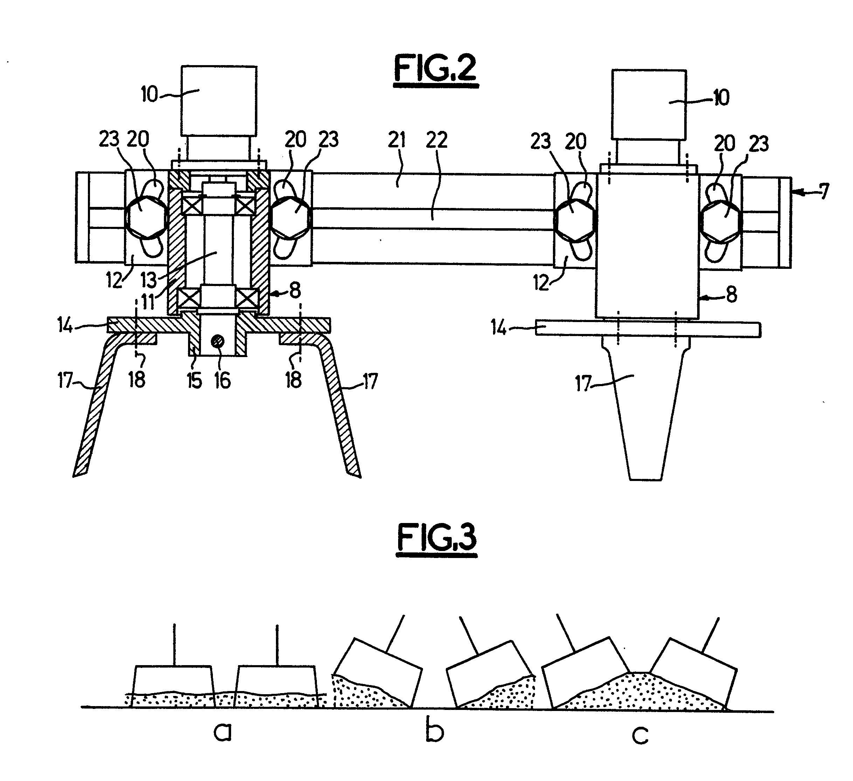

Sur les figures 3a, 3b et 3c sont illustrées schématiquement quelques possibilités d'utilisation du cultivateur rotatif selon l'invention. Le fait que les moteurs et les rotors soient indépendants l'un de l'autre et que leur position relative soit réglable, fait que des opérations impossibles à réaliser par des machines classiques deviennent possibles. Par le réglage de l'orientation des axes respectifs des rotors 8, on peut ainsi réaliser un ameublissement classique et des buttages tels qu'illustrés sur les figures 3b et 3c.

La vitesse de rotation des rotors 8 peut être contrôlée grâce à un système de distribution hydraulique approprié tel qu'un diviseur de débit raccordé d'une part à une centrale hydraulique d'alimentation et d'autre part aux moteurs hydrauliques. Les plateaux porte-dents 14 rendus solidaires de l'arbre 13 du rotor 8 par l'intermédiaire de la goupille de sécurité 16 sont interchangeables et donc peuvent être choisis pour porter des dents adaptés aux exigences de chaque travail particulier.

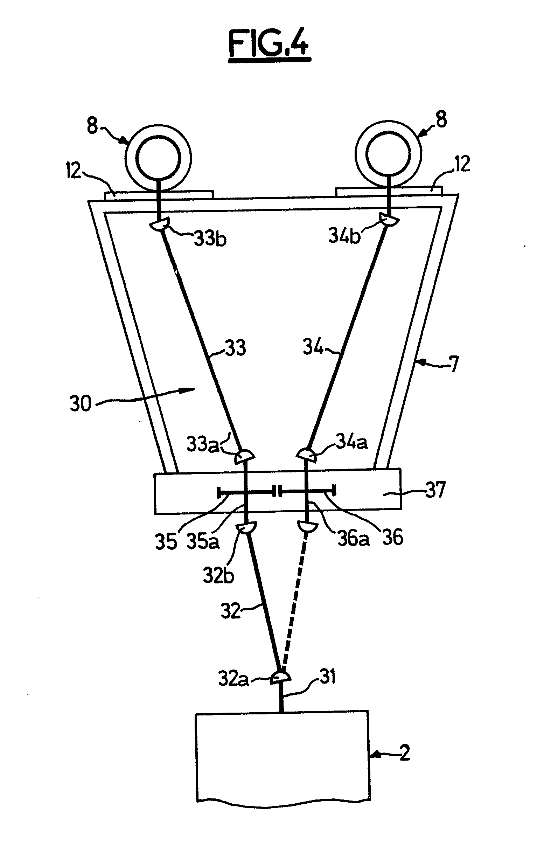

Sur la figure 4 est représentée une variante de réalisation d'un cultivateur rotatif conforme à l'invention. Dans ce mode de réalisation, les moyens d'entraînement des rotors 8 sont constitués par un système de transmission mécanique 30 accouplé à une prise de force 31 de l'engin porteur 2. On supprime de ce fait l'utilisation des moteurs 10 dont l'alimentation est quelquefois difficile à assurer pour certain type d'engins porteurs.

Le système de transmission 30 comprend un arbre principal 32, deux arbres secondaires 33 et 34, un tran d'engrenage formé par deux pignons 35 et 36 d'axes 35a et 36a. Chaque arbre 32, 33, 34 est du type télescopique et muni de deux joints universels à ses extrémités.

Un premier joint universel 32a de l'arbre principal 32 est accouplé à la prise de force 31 de l'engin porteur 2. Le second joint universel 32b de l'arbre principal 32 est en prise avec le pignon 35 dans un carter 37 qui est monté en translation transversale du sens de déplacement de l'engin porteur 2 sur le bâti-support 7. Les pignons 35 et 36 enfermés dans le carter 37 sont de préférence de dimension identique et montés avec leurs axes parallèles et à entraxe fixe, de façon à être engrénés l'un dans l'autre. Le sens de rotation du pignon 35 est donc l'inverse de celui du pignon 36. Leurs vitesses de rotation sont identiques.

Aux pignons 35 et 36 sont accouplés respectivement les joints universels 33a et 34a des arbres secondaires 33 et 34. Les joints universels 33b et 34b des arbres 33 et 34 sont accouplés chacun à un rotor 8. Les rotors 8 sont ainsi entraînés en rotation à la même vitesse et en sens contraires. Pour changer le sens de rotation des rotors 8, il suffit de changer le pignon d'accouplement avec le joint universel 32b de l'arbre 32, c'est-à-dire le pignon 36 selon le trait en pointillé au lieu du pignon 35, le sens de rotation de la prise de force 31 étant supposé fixe.

Les autres caractéristiques décrites dans l'exemple précédent restent identiques pour cette variante de réalisation de cultivateur rotatif. Grâce aux arbres de transmission télescopiques 32, 33 et 34, le réglage individuel des rotors et le déportement longitudinal et transversal du bâti-support 7 par rapport à l'engin porteur 2 sont assurés comme précédemment sans aucun problème d'entraînement. Dans une variante simplifiée, la prise de force 31 peut être reliée directement ou par un arbre longitudinal non télescopique démuni de joints universels à l'un des pignons 35 ou 36 qui est alors placé dans l'axe de la prise de force 31.

On voit que les problèmes posés par les viticulteurs sont résolus grâce à la présente invention en réalisant un cultivateur rotatif polyvalent à rotors indépendants orientables. Il est important de rappeler que le cultivateur rotatif selon l'invention est adapté à toutes sortes d'engins porteurs automoteurs grâce à son système d'attelage amovible. L'ensemble amovible pour décompacter le sol est interchangeable ainsi que les plateaux porte-dents. Enfin il peut être utilisé pour toutes sortes de cultures en lignes et non pas seulement la culture de la vigne.

Une application particulièrement intéressante de la présente invention consiste à associer deux ou plusieurs cultivateurs rotatifs de l'invention pour cultiver simultanément plusieurs rangées parallèles au sens de déplacement de l'engin porteur automoteur, ledit engin porteur pouvant être un tracteur enjambeur. Dans ce cas, les cultivateurs rotatifs sont indépendants l'un de l'autre et peuvent travailler individuellement le sol desdites rangées de cultures de façon différente.

## Revendications

1. Cultivateur rotatif polyvalent (1) adapté à un engin porteur automoteur (2) pour cultures en lignes, notamment de la vigne, comportant un moyen amovible d'attelage (5) monté sur un bâti-support (7), des moyens d'ameublissement (8, 9) du sol montés sur le bâti-support et des moyens d'entraînement desdits moyens d'ameublissement qui comprennent au moins deux rotors dentés (8) à axes sensiblement verticaux disposés dans un plan sensiblement transversal au sens de déplacement de l'engin porteur, caractérisé par le fait que chaque rotor (8) est accouplé mécaniquement de façon rigide à un organe d'entraînement indépendant (10), et que chaque ensemble formé par un rotor et son organe d'entraînement est réglable individuellement en inclinaison et en translation horizontale dans ledit plan.

2. Cultivateur rotatif selon la revendication 1, caractérisé par le fait que le bâti-support (7) est pourvu de premières rainures perpendiculaires au sens de déplacement de l'engin porteur, de sorte que le bâti-support puisse être déporté en translation perpendiculairement au sens de déplacement de l'engin porteur.

3. Cultivateur rotatif selon la revendication 1 ou 2, caractérisé par le fait que le bâti-support (7) est muni d'une deuxième rainure, parallèle aux premières rainures, de façon à permettre la translation horizontale desdits ensembles dans ledit plan par rapport au bâti-support.

4. Cultivateur rotatif selon l'une quelconque des revendications précédentes, caractérisé par le fait le moyen d'attelage (5) est monté sur le bâti-support (7) par l'intermédiaire d'une pièce allongée (6) et de brides, de façon à permettre de régler la position du bâti-support parallèlement au sens de déplacement de l'engin porteur.

5. Cultivateur rotatif selon l'une quelconque des revendications précédentes, caractérisé par le fait qu'il comporte une pièce amovible (9) montée sur le bâti-support (7) pour décompacter le sol devant les rotors (8) dans le sens du déplacement de l'engin porteur, ladite pièce (9) étant montée de façon à pouvoir être décalée longitudinalement et latéralement par rapport au bâti-support.

6. Cultivateur rotatif selon la revendication 5, caractérisé par le fait que la pièce amovible (9) est constituée d'éléments mécaniques tels que buttoir, griffes, dents flexibles, dents rigides droites ou inclinées, coutre, déflecteur et versoir de profils divers.

7. Cultivateur rotatif selon l'une quelconque des revendications précédentes, caractérisé par le fait qu'il comporte un circuit d'alimentation hydraulique, et que les organes d'entraînement sont des moteurs hydrauliques indépendants.

8. Cultivateur rotatif selon l'une quelconque des revendications 1 à 6, caractérisé par le fait qu'il comporte un système de transmission mécanique (30) accouplé d'une part aux organes d'entraînement (10) des rotors (8) et d'autre part à une prise de force (31) de l'engin porteur.

9. Cultivateur rotatif selon la revendication 8, caractérisé par le fait que le système de transmission mécanique comprend un train d'engrenage (35, 36) à plusieurs sorties, chaque sortie étant reliée mécaniquement à l'un des organes d'entraînement (10) par l'intermédiaire d'arbres télescopiques (33, 34) munis chacun de deux joints universels.

10. Cultivateur rotatif selon la revendication 9, caractérisé par le fait que le train d'engrenage est accouplé soit directement, soit par l'intermédiaire d'un arbre télescopique (32) muni de deux joints universels (32a, 32b) à ses extrémités, à la prise de force (31) de l'engin porteur.

# FIG.1

EP 0 341 153 A1

## FIG.2

## FIG.3

EP 0 341 153 A1

# FIG.4